# EUROPÄISCHE PATENTSCHRIFT

(11) **EP 1 222 778 B1**
(45) Veröffentlichungstag und Bekanntmachung des Hinweises auf die Patenterteilung: **28.12.2005**
(21) Anmeldenummer: 00972782.7
(22) Anmeldetag: 17.10.2000
(51) Int. Cl.: H04L 12/40, H04L 12/10

(54) **VERFAHREN ZUR AUF EINE VERSORGUNGSGLEICHSPANNUNG AUFGELAGERTEN SIGNALÜBERTRAGUNG IN EINEM BUSSYSTEM**
METHOD FOR THE TRANSMISSION OF SIGNALS IN A BUS SYSTEM, SUPERPOSED ON A DIRECT SUPPLY VOLTAGE
PROCEDE DE TRANSMISSION DE SIGNAUX SUPERPOSES A UNE TENSION CONTINUE D'ALIMENTATION DANS UN SYSTEME BUS

(30) Priorität: 21.10.1999 DE 19950655
(43) Veröffentlichungstag der Anmeldung: 17.07.2002
(73) Patentinhaber: Conti Temic microelectronic GmbH, 90411 Nürnberg (DE); ROBERT BOSCH GMBH, 70442 Stuttgart (DE)
(72) Erfinder: BISCHOFF, Michael, 63768 Hottenberg (DE); DEPPE, Rüdiger, 85049 Ingolstadt (DE); FENDT, Günter, 86529 Schrobenhausen (DE); HUBER, Thomas, 71717 Beilstein (DE); MÜLLER, Norbert, 86529 Schrobenhausen (DE); NITSCHKE, Werner, 71254 Ditzingen (DE); RINKENS, Johannes, 85055 Ingolstadt (DE); SCHÄDLER, Peter, 73636 Ludwigsburg (DE); SCHÄFFER, Stefan, 85051 Ingolstadt (DE); STEINER, Werner, 86529 Schrobenhausen (DE)
(86) Internationale Anmeldenummer: PCT/EP2000/010192
(87) Internationale Veröffentlichungsnummer: WO 2001/030029

(56) Entgegenhaltungen:
- DE-A- 19 813 955
- US-A- 4 949 359

## Beschreibung

Die Erfindung betrifft ein Verfahren zur Signalübertragung in einem Bussystem zwischen einer Zentraleinheit und einer Anzahl von Modulen aufgelagert auf eine von der Zentraleinheit auf wenigstens eine Busleitung bereitgestellte Versorgungsgleichspannung. Das Signal wird dabei der Versorgungsgleichspannung additiv hinzugefügt, also aufgelagert, bzw. die Versorgungsgleichspannung entsprechend moduliert.

Ein solches Verfahren ist aus US-A-4 949 359 bekannt.

Aus der DE 196 22 685 A1 ist ein Verfahren zu entnehmen, bei der zwischen einer als Zentraleinheit dienenden Auswerteeinheit und einer Zündeinrichtung als Modul Signale ausgetauscht werden. Zur Übertragung dieser Signale von der Auswerteeinheit zur Zündeinrichtung wird ein Wechselspannungssignal erzeugt, welches auf eine zur Spannungsversorgung dienende Gleichspannung aufgelagert wird. Für Rückantworten von der Zündeinrichtung wird deren Stromaufnahme gezielt verändert (vgl. Spalte 6, ab Zeile 25 und Ansprüche 6 bis 9 der DE 196 22 685 A1). Nachteil dieser Anordnung ist, daß nur genau ein Modul mit der Zentraleinheit Signale austauschen kann. Ein entsprechendes Verfahren der bidirektionalen Datenübertragung ist darüber hinaus bereits der DE 39 03 377 A1 zu entnehmen. Auch dort kann nur genau ein als Zählwerk ausgebildetes Modul an die als Lese-Schreibgerät ausgebildete Zentraleinheit gekoppelt werden. Der Ruhestrom des Moduls muß innerhalb einer eng begrenzten vorgegebenen Größenordnung liegen, um die strommodulierten Rücksignale empfangen zu können.

In der DE 44 11 184 ist darüber hinaus ein Fahrzeugsicherheitssystem mit einem zeitlichen Wechsel von Energie- und Datenübertragung auf einer Busleitung beschrieben.

Ein Verfahren zur Signalübertragung zwischen einer Mehrzahl von Modulen durch Auflagerung eines Wechselsignals auf eine Gleichspannung bzw. eine entsprechende Modulation dieser ist beispielsweise der US 4,463,341 zu entnehmen, bei der in einem Bussystem eine Vielzahl von Sendern und Empfängern angeordnet ist, die die Gleichspannung auf dem Bussystem zur Spannungsversorgung nutzen und auf diese frequenzmoduliert Wechselspannungssignale auflagern, wobei jeweils ein Sender und ein Empfänger auf eine gemeinsame Übertragungsfrequenz geeicht sind. Ein derartiges Bussystem wäre zwar ohne weiteres auf die Signalübertragung mit einer Zentraleinheit und mehreren Modulen übertragbar, indem die Zentraleinheit Wechselspannungssignale mit der jeweiligen Übertragungsfrequenz verwenden würde, ergäbe jedoch ebenso wie das US-Patent den Nachteil, daß eine äußerst hohe Genauigkeit der Frequenzen für die Demodulation erforderlich ist. Der Aufwand für eine solches Bussystem ist erheblich.

Aus der US 4,736,367 ist ein Bussystem zu entnehmen, bei dem von einem Mikrocomputer aus über eine Busleitung ebenfalls eine Vielzahl von Modulen mit Spannung versorgt sowie durch aufgelagerte Spannungssignale Daten zu den Modulen übertragen werden und außerdem die Module durch Veränderung ihrer Stromaufnahme Daten an den Mikrocomputer zurücksenden. Dazu ist in den Modulen jeweils eine steuerbare Stromsenke mit einer Konstantstromquelle vorgesehen, so daß jedes Modul eine durch die Konstantstromquelle bestimmte Stromaufnahme erzeugen kann. Die Unterscheidung der Daten der einzelnen Module erfolgt dabei durch eine serielle Übertragung in vorgegebenen Zeitfenstern, denen die Module durch Adressen zugeordnet sind. Am Mikrocomputer entsteht aufgrund der sich verändernden Stromaufnahme ein Spannungssignal, welches mittels eines Schwellwertes ausgewertet wird. Als problematisch erweist sich hierbei, daß zur Erkennung der strommodulierten Signale von den Modulen einerseits die Versorgungsgleichspannung und andererseits die Stromaufnahme durch die Module bekannt und konstant ist. Würden beispielsweise Module mit einer anderen Stromaufnahme verwendet, wäre ein Vergleich mit dem Schwellwert unmöglich. Auch das Hinzufügen mehrerer neuer Module würde zu Fehlern führen, denn aufgrund der Stromaufnahme der hinzugefügten Module käme es ebenfalls zu einer Verschiebung der Gesamtstromaufnahme. Berücksichtigt man des weiteren die Schwankungen der versorgungsspannung in meist batterieversorgten Bussystemen in Kraftfahrzeugen sowie die Temperatureinflüsse auf die elektrischen Bauelemente, so wird deutlich, daß eine große Zahl von Störgrößen die Signalübertragung stören und eine Rückerkennung des Signals unmöglich machen können.

Aufgabe der Erfindung ist es, ein alternatives verfahren zur Signalübertragung zwischen einer Zentraleinheit und einer Anzahl von Modulen aufgelagert auf eine Versorgungsgleichspannung anzugeben, bei dem die Anzahl der Module wählbar ist, welches schaltungstechnisch einfach umzusetzen und unanfällig gegen Störungen oder Veränderungen ist.

Diese Aufgabe wird durch die Merkmale der Patentansprüche 1 und 5 gelöst. Grundgedanke der Erfindung ist es, daß eine Übertragung eines Spannungssignals aufgelagert auf die Versorgungsgleichspannung von den Modulen an die Zentraleinheit oder alternativ auch an ein anderes Modul möglich wird, wenn für die Zeitdauer des Sendens durch die Module diese versorgungsgleichspanung nicht direkt, sondern über einen Widerstand der Busleitung zugeführt wird und so die Module die auf der Busleitung anliegende Spannung entsprechend dem zu übertragenden Spannungssignal verändern können.

Wenn die Zentraleinheit selbst sendet, werden niederohmig vorzugsweise direkt über zwei wechselweise geschlossene Schalter zwei zur signalisierung dienenden Spannungspegel schnell und hart zugeschaltet, also die Spannung auf der Versorgungsleitung aufgrund des niedrigen Innenwiderstands der Schalter geprägt.

Sollen die Module jedoch senden, so weist die Zentraleinheit also für diese Zeitdauer der Rückübertragung über den zwischengeschalteten Widerstand einen höheren Innenwiderstand für die zugeführte versorgungsgleichspannung auf, so daß aufgrund der vergleichsweise zu diesem Widerstand niederohmigen Zuführung des von dem Modul zu sendenden Spannungssignals die Spannung auf der Busleitung verändert werden kann. Die Versorgungsgleichspannung liegt somit höherohmig, also weich und veränderbar an. Im folgenden wird für diese beiden Fälle auch von einem harten, weil niederohmig festgelegten, oder weichen, weil beeinflußbaren Pegel auf der Verbindungsleitung gesprochen, je nach der durch Zwischenschaltung des widerstands möglichen Beeinflußbarkeit der Spannung auf der Busleitung durch die Module. Analog dazu wird auch der Begriff harter bzw. weicher Innenwiderstand der Zentraleinheit gebraucht.

Im Gegensatz zu einer Signalisierung der Module durch Stromsignale, die bekanntermaßen entsprechend dem Ohmschen Gesetz natürlich auch eine gewisse Spannungsänderung auf der Busleitung hervorrufen, kann durch beidseitige Spannungssignalübertragung ein deutlich höherer Signalhub und damit eine verbesserte Störsicherheit erreicht werden. Zudem ist die Erzeugung des Spannungssignals in den Modulen passiv, denn es wird die über den zwischengeschalteten Widerstand weich, also veränderbar anliegende Versorgungsgleichspannung ausgenutzt und nur für die eigentliche Bitinformation verändert, vorzugsweise durch schalten auf eine abweichende Spannungspegelquelle herabgesetzt. Die Module benötigen so keine eigene Sendeleistung, sondern nur die für die Steuerungelektronik und die nachgeschalteten Verbraucher, bspw. Sensoren erforderliche Energie.

In vorteilhafter Weise werden die Spannungssignale pulsweitenmoduliert, wobei die Takterzeugung hart, also mit niedrigem innenwiderstand, durch die Zentraleinheit erfolgt. Der die Bitinformation tragende Bestandteil des Spannungssignals wird nachfolgend je nach Richtung der Übertragung gemäß dem zugrundeliegenden Verfahren voneinander abweichend in der Zentraleinheit bzw. den Modulen erzeugt. Dementsprechend liegt in der Zentraleinheit jeweils ein harter oder weicher Innenwiderstand vor.

Die beanspruchten Ausgestaltungen der Schaltungsanordnung zur Durchführung des Verfahrens verdeutlichen die äußerst einfache schaltungstechnische Umsetzung dieses Verfahrens.

In besonderer Weise eignet sich das beschriebene Verfahren sowie die Schaltungsanordnung für die Verwendung als ein Sensorbussystem eines Insassenschutzsystems insbesondere in Kraftfahrzeugen. Dabei werden an die einzelnen Module Sensoren angeschlossen, die bspw. neben den auf das Fahrzeug wirkenden Beschleunigungskräften auch die Abstände zu Objekten in der Fahrzeugurngebung (Abstandswarnradar), die Position der Insassen (Sitzbelegungserkennung) oder Zustandsparameter des Fahrzeugs, wie die Geschwindigkeit erfassen. Unterschiedliche Sensoren werden so über die Module an ein gemeinsames Bussystem angeschlossen und mit der Zentraleinheit verbunden. Die Zentraleinheit koordiniert die gesamte Energie- und Signalübertragung durch die Zwischenschaltung des Widerstands und natürlich durch die an die Module gesendete Daten, die in der dortigen Steuerelektronik ausgewertet wird.

Die Erfindung soll nachfolgend anhand von Ausführungsbeispielene und Figuren näher erläutert werden. Es zeigen:
- Figur 1: Schaltungsanordnung zur Durchführung des Verfahrens mit einer Zentraleinheit und einer Anzahl über eine Busleitung damit verbundenen Modulen, von denen eines im Detail dargestellt ist
- Figur 2: Ablauf einer Datenübertragung von der Zentraleinheit an die Module
- Figur 3: Ablauf einer Datenübertragung ausgehend von einem der Module an die Zentraleinheit bzw. ein anderes Modul

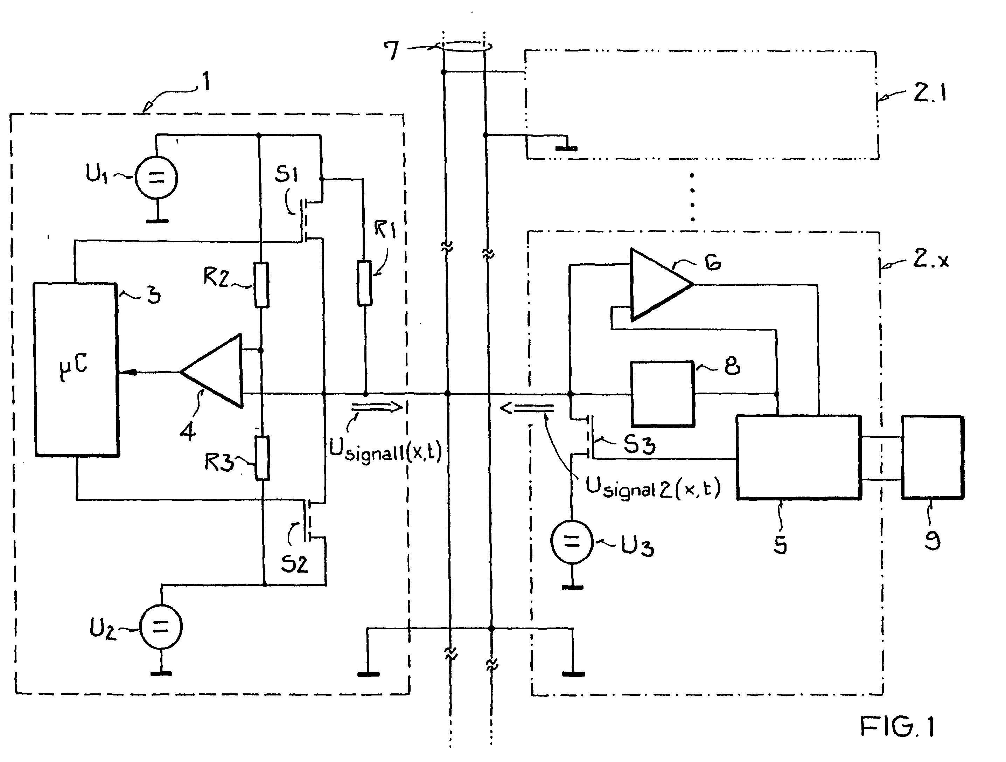

Die Figur 1 zeigt eine Schaltungsanordnung zur Durchführung des Verfahrens mit einem Bussystem mit einer Zentraleinheit 1 und einer Anzahl über eine Busleitung 7 damit verbundenen Modulen 2.1 bis 2.n, von denen zur besseren überschaubarkeit nur das x-te Modul 2.x im Detail dargestellt ist, wobei die anderen selbstverständlich grundsätzlich identisch aufgebaut sind, jedoch durchaus andere nachgeschaltete Lastelemente, bspw. Sensoren 9 aufweisen.

Die Zentraleinheit 1 besteht aus einer Steuerungselektronik 3, bspw. einem Mikrocontroller, der die Steuerung der Zentraleinheit 1 und damit auch der Datenübertragung auf der Busleitung 7 übernimmt. Es sind zwei Spannungspegelquellen U1 und U2 für die gleichnamig verwendeten Spannungspegel U1 und U2 vorgesehen, wobei eine dieser, üblicherweise die größere von beiden und in diesem Beispiel U1 als Versorgungsgleichspannung verwendet wird. Der zweite Spannungspegel U2 könnte auch das Massepotential sein, bevorzugt ist jedoch ein zumindest geringfügig höheres Potential, da mittels diesem auch Kurzschlüsse der Busleitung 7 auf Masse erkannt werden können. Wechselweise wird jeweils einer dieser Spannungspegel U1 ,U2 über jeweils einen Schalter S1,S2 mit der Busleitung verbunden. Zudem ist zum ersten Schalter S1 ein hochohmiger Widerstand R1 parallel geschaltet, so daß bei geschlossenem Schalter S2 die Spannung auf der Busleitung 7 ohne nennenswerte Abweichung den Spannungspegel U2 annimmt, andererseits bei offenen Schaltern S1 und S2 der Spannungspegel U1 über diesen Widerstand R weich, also veränderbar anliegt.

Auf der von der Versorgungsgleichspannung U1 abgewandten Seite des Widerstands, also an der Busleitung wird die Spannung von einem Komparator 4 abgegriffen und mit einer Spannungsschwelle verglichen, die in einer besonders einfachen Ausgestaltung durch einen Spannungsteiler mit den Widerständen R2 und R3 aus der Differenz von erstem und zweitem Spannungspegel U1, U2 erzeugt wird.

Die Busleitung 7 wird in diesem Ausführungsbeispiel noch durch eine zweite, das Massepotential führende Leitung ergänzt. An die Busleitung 7 sowie die Masseleitung sind in diesem Ausführungsbeispiel parallel n Module 2.1 ... 2.x... 2.n angeschlossen. Das im Detail für die anderen beispielhaft dargestellte Modul 2.x weist wie jedes der Module 2 eine Steuerungselektronik 5, eine Empfangseinrichtung 6, eine Sendeeinrichtung und eine Energieversorgungseinrichtung 8 auf. , (S3)

Die Empfangseinrichtung 6 erfaßt die auf der Busleitung 7 übertragenen Spannungssignale (Usignal1(x;t) ; (Usignal2(x;t)) und stellt diese in aufbereiteter Form der Steuerungselektronik 5 zur Verfügung. So wird in der aus diesem Grunde auch als Komparator dargestellten Empfangseinrichtung 6 die Spannung auf der Busleitung 7 mit einer Referenz-spannung verglichen, die in den Modulen intern erzeugt wird, bspw. von der Energieversorgungseinrichtung 8. Die Referenzspannung kann beispielsweise auch als interne Versorgungsspannung verwendet werden, wobei die Energieversorgungseinrichtung 8 aus zumindest einem der Spannungspotentiale , hier in diesem Ausführungsbeispiel U1, die Energie für das Modul 2 bezieht, die Spannung also stabilisiert und zwischenspeichert. Die Stabilisierung und zwischenspeicherung in der Energieversorgungseinrichtung 8 ist dabei erforderlich, weil die Spannung auf der Versorgungsleitung 7 ja durch die aufgelagerten Spannungssignate (Usignal1(x;t) ; (Usignal2(x;t)) ständig verändert wird.

Die Steuerelektronik 5 koordiniert in Abhängigkeit von den Steuerungsinformationen der Zentraleinheit 1 alle Abläufe in dem Modul 2, aktiviert insbesondere gegebenenfalls die Sendeeinrichtung S3, wenn gerade dieses Modul 2.x zum Senden berechtigt und/oder aufgefordert ist. Das Modul 2.x kann dabei sowohl an die Zentraleinheit 1 senden als auch an die anderen an der Busleitung angeschlossenen Module 2.1 ... 2.(x-1) sowie 2.(x+1) ... 2.n. selbstverständlich können auch die anderen Module bzw. die Zentraleinheit dem Datenaustausch der anderen empfangen. Der sogenannte data layer, also die Codierung von Adressen und kompletten steuerungsbefehlen (bspw. das Programmieren von Befehlen der Zentraleinheit an die Module, das Auslesen von Sensordaten ect.) in eine Folge von einzelnen Bits kann dabei völlig frei an die Bedürfnisse des Einzelfalls angepaßt werden und wird hier nicht näher beschrieben.

Die Sendeeinrichtung der Module 2 ist in diesem Ausführungsbeispiel besonders einfach als ein Schalter S3 ausgestaltet, der angeordnet ist zwischen der Busleitung 7 und einer dritten Spannungspegelquelle U3, die zumindest einen vor der Versorgungsgleichspannung, hier also U1 abweichenden wert, vorzugsweise den zweiten spannungspegel U2 aufweist. In Abhängigkeit von der Steuerelektronik 5 wird dieser Schalter S3 während des weichen Innenwiderstands (beide Schalter S1 und S2 der Zentraleinheit 1 sind offen) in Abhängigkeit von der zu übertragenden Bitinformation zugeschaltet, also beispielsweise für eine Bit mit dem Wert "Null, während bei einer "1" der Schalter S3 offen bleibt. Wird der Schalter S3 geschlossen, so liegt die Spannungspegeiquelle U3 deutlich niederohmiger an der Busleitung 7 als die Versorgungsgleichspannung U1, die ja über den Widerstand R zugeführt wird. Folglich wird die Spannung auf der Busleitung 7 zumindest annähernd den Wert von U3 annehmen. Die Lage der Spannung auf der Busleitung wird also durch den Spannungsteiler aus R1 und dem Innenwiderstand des Schalters S3 bestimmt. Die Empfangseinrichtung 4 der Zentraleinheit 1 sowie die der anderen Module kann aber über den dort anliegenden Referenzwert, also für die Zentraleinheit bspw. durch R2 und R3 angepaßt werden, so daß der Wert des Widerstands R1 in weiten Grenzen wählbar und die Schaltungsanordnung entsprechend anpaßbar ist.

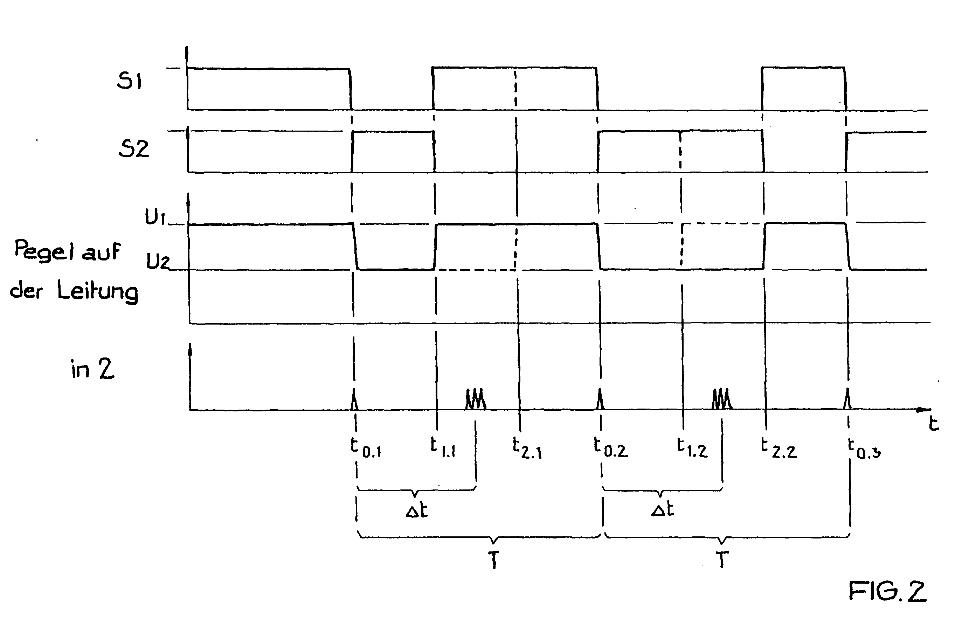

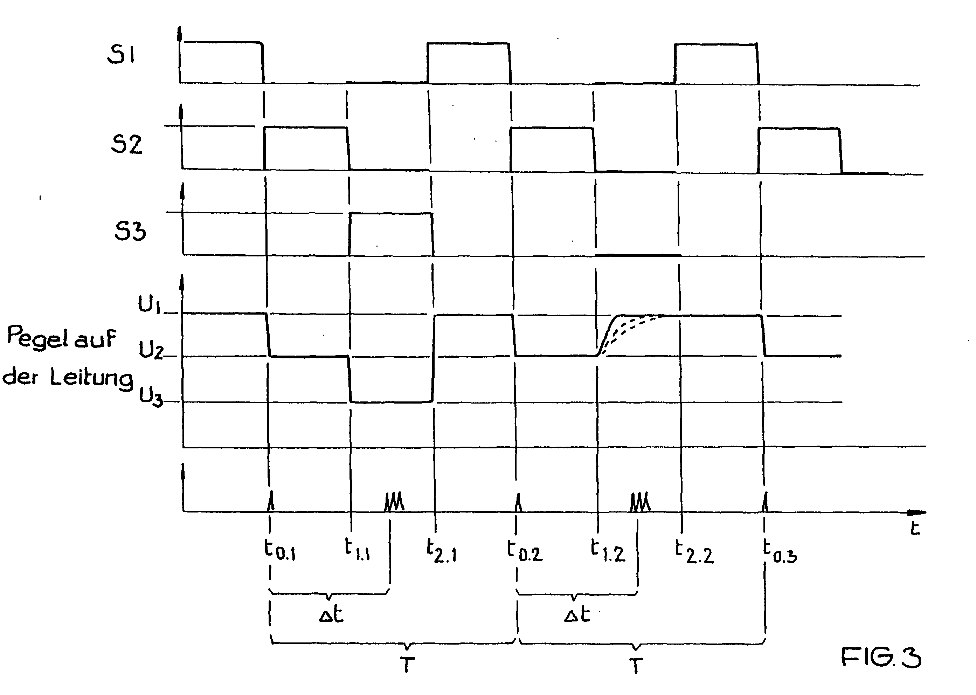

Figur 2 zeigt anhand der Schaltzustände von S1 und S2 sowie des Pegels auf der Busleitung und eines symbolischen Taktschemas des Moduls nun den Ablauf einer Datenübertragung von der Zentraleinheit 1 an die Module 2 und Figur 3 den Ablauf einer Datenübertragung ausgehend von einem der Module 2 an die Zentraleinheit 1 bzw. ein anderes Modul 2, wobei jeweils die Übertragung einer Bitinformation Null und Eins pulsweitenmoduliert beispielhaft gezeigt wird.

In Figur 2 wird beispielsweise noch einer längeren Übertragungspause durch wechselseitiges Öffnen von S1 und schließen von S2 zum Zeitpunkt t0.1eine als Takt dienende fallende Flanke erzeugt, die auf der Busleitung 7 und damit an den Modulen 2 einen Wechsel vom der als Versorgungsgleichspannung dienenden ersten Spannungspegel U1 auf U2 bewirkt. Der Takt wird dabei von den Modulen 2 erkannt, wie skizzenhaft angedeutet.

Nach einer gewissen Haltezeit von U2 wird die eigentliche Bitinformation pulsweitenmoduliert übertragen, indem in einem von der Bitinformation abhängigen Zeitabstand von t1 bis t2 vom Takt t0 wieder der erste Spannungspegel U1 eingenommen wird. Hier wechselt bspw. für eine "Eins" der pegel auf der Leitung schon zu Anfang, also t1.1 auf U1, während im nachfolgenden zweiten Takt, vermerkt als Index 2 für eine Null erst zum Zeitpunkt t2.2 auf U1 umgeschaltet wird, jeweils hart, also ohne Zwischenschaltung des Widerstands R. In einem vorbestimmten Abstand Δt zum Taktanfang t0.1,t0.2,... erfolgt in den Modulen 2 die Auswertung der Spannung auf der Busleitung bspw. hier skizzenhaft angedeutet las eine mehrfache Abtastung. Der Schalter 3 der Module 2 ist dabei selbstverständlich offen.

Die Übertragung von einem der Module 2 aus wird nun in Figur 3 gezeigt, wobei für die bessere Darstellung in diesem Fall ein von U2 abweichender dritter Spannungspegel U3 angenommen wird, da man in diesem Fall für beide binären werte "Null" und "Eins" eine Veränderung sofort erkennt.

Die Takterzeugung erfolgt in dieser bevorzugten Ausgestaltung zunächst wieder von der Zentraleinheit 1 in gleicher Weise, also durch wechselseitiges Schalten von S1 und S2 und somit eine fallende Flanke von U1 auf U2 in t0.1, t0.2,...

zum Zeitpunkt t1.1, t1.2,... jedoch wechselt die Zentraleinheit 1 jedoch durch Öffnen beider Schalter, also von S1 und S2, in die Phase des weichen innenwiderstands. Es wird nun die versorgungsspannung U1 nur noch über den Widerstand R auf die Busleitung zugeführt. Schließt zu t1.1 aber nun das zum Senden ausgewählte Modul 2.x den Schalter S3, fällt die Spannung auf der Versorgungsleitung 7 auf U3 ab. Bleibt auch S3 offen, wird der Pegel auf der Busleitung 7 in Abhängigkeit von der Größe des Widerstands R wieder den Wert der Versorgungsgleichspannung U1 annehmen. Die Zentraleinheit 1 sowie eventuell auch die anderen Module 2 erfassen zwischen t1 und t2 den Pegel auf der Busleitung 7, der in diesem Fall entweder U1 und U3 ist, bei U3=U2 eben entweder U1 oder U2 annimmt. Wiederum wird die Erfassung des Spannungssignals in Fig. 3 durch mehrfache Abtastung angedeutet.

Letztlich grundlegend für den Ablauf des Verfahrens ist somit die weiche, also über den zwischengeschalteten Widerstand R hochohmig erfolgende Zuführung des Versorgungsgleichspannung U1 und die damit mögliche Übertragung eines Spannungssignals von den Modulen 2 auf die Verbindungsleitung, insbesondere zu der Zentraleinheit 1.

## Patentansprüche

1. Verfahren zur Signalübertragung in einem Bussystem zwischen einer Zentraleinhelt (1) , die zwei Quellen für zwei unterschiedliche Spannungspegel (U1,U2) aufweist, die über jeweils einen Schalter (S1,S2) mit einer Busleitung (7) verbunden sind, wobei parallel zu einem der Schalter (S1) ein Widerstand (R1) geschaltet ist und einer Anzahl n von Modulen (2=2.1...2.x), wobei jedes der Module (2) eine Steuerungselelektronik (5), eine Empfangseinrichtung (6) und eine Sendeeinrichtung (S3) aufweist,
a) wobei aufgelagert auf eine von der Zentraleinheit (1) auf wenigstens einer Busleitung (7) bereitgestellte Versorgungsgleichspannung von der Zentraleinheit (1) eln erstes Spannungssignal (Usignal1(x;t)) on zumindest eines der Module (2) übertragen wird und
b) zumindest eines der Module (2) ein zweites Spannungssignal (Usignal2(x;t)) sendet,
c) wobei die Zentraleinheit (1) und die Module (2) zeitversetzt senden und
d) während des Empfangs des zweiten Spannungssignals (Usignal2(x;t)) die Zentraleinheit die Versorgungsgleichspannung über dan zwischengeschalteten Widerstand (R1) auf die Busleitung (7) zuführt und
e) in der Zentraleinheit auf der von der Versorgungsgleichspannung abgewandten Seite des Widerstands (R) an der Busleitung (7) das von dem Modul (2) hervorgerufene zweite Spannungssignal (Usignal2(x;t)) erfaßt wird,
**dadurch gekennzeichnet, daß**
f) die Sendeeinrichtung (S3) mittels eines Schalters (S3) der angeordnet ist zwischen der Busleitung (7) und einer dritten Spannungspegelquelle (U3) in Abhängigkeit von der Steuerelektronik (5) die Busleitung (7) auf einen von der Versorgungsgleichspannung abweichenden Spannungspegel (U3) zieht.

2. Verfahren nach Anspruch 1, **dadurch gekennzeichnet, daß** der von der dritten Spannungspegelquelle (U3) erzeugte Spannungspegel dem zweiten Spannungspegel (U2) entspricht.

3. Verfahren nach einem der vorangehenden Ansprüche, **dadurch gekennzeichnet, daß** die Spannungssignale (Usignal1(x;t) ; (Usignal2(x;t)) bitweise pulsweitenmoduliert werden, indem
a) zunächst die Zentraleinheit (1) zur Erzeugung eines Takts für jedes Bit von dem ersten Spannungspegel (U1) auf den zweiten Spannungspegel (U2) ohne Zwischenschaltung des Widerstands (R1) wechselt,
b) zur Datenübertragung von der Zentraleinheit (1) an die Module (2) die Zentraleinheit (1) in einem von der Bitinformation abhängigen Zeitabstand vom Takt wiederum ohne Zwischenschaltung des Widerstands (R) wieder den ersten Spannungspegel (U1) einnimmt, während
c) zur Datenübertragung von einem der Module (2) nach der Erzeugung des Takts die Zentraleinheit (1) für eine vorgegebene Zeitdauer der Busteitung (7) über den Widerstand (R1) den ersten Spannungspegel zuführt, und innerhalb dieser Zeitdauer das jeweilige Modul (2) in Abhängigkeit von der Bitinformation die Versorgungsleitung (7) auf einen abweichenden Spannungspegel (U3) zieht.

4. Verfahren nach Anspruch 3, **dadurch gekennzeichnet, daß** der abweichende Spannungspegel (U3) dem zweiten Spannungspegel (U2) entspricht.

5. Schaltungsanordnung zur Durchführung eines Verfahrens nach einem der vorangehenden Ansprüche, mit
a) einer Zentraleinheit (1) und einer Anzahl (n) von Modulen (2=2.1...2.x) sowie einem Bussystem zwischen dieser Zentraleinheit (1) und den Modulen (2=2.1...2.x), bei der die Zentraleinheit (1) zwei Quellen für zwei unterschiedliche Spannungspegel (U1,U2) aufweist, die über jeweils einen Schalter (S1,S2) mit einer Busleitung (7) verbunden sind, wobei parallel zu einem der Schalter (S1) ein Widerstand (R1) geschaltet ist,
b) bei der die Zentraleinheit (1) so ausgestaltet ist, daß aufgelagert auf eine von der Zentraleinheit (1) auf wenigstens einer Busleitung (7) bereitgestellte Versorgungsgleichspannung von der Zentraleinheit (1) ein erstes Spannungssignal (Usignal1(x;t)) an zumindest eines der Module (2) übertragen wird und
c) zumindest eines der Module (2) so ausgestaltet ist, daß es ein zweites Spannungssignal (Usignal2(x;t)) sendet,
d) wobei die Zentraleinheit (1) und die Module (2) so ausgestaltet sind, daß sie zeitversetzt senden und
e) die Zentraleinheit (1) so ausgestaltet ist, daß während des Empfangs des zweites Spannungssignals (Usignal2(x;t)) die Zentraleinheit die Versorgungsgleichspannung über den zwischengeschalteten Widerstand (R1) auf die Busleitung (7) zuführt und
f) die Zentraleinheit (1) so ausgestaltet ist, daß in der Zentraleinheit auf der von der Versorgungsgleichspannung abgewandten Seite des Widerstands (R) an der Busleitung (7) das von dem Modul (2) hervorgerufene zweite Spannungssignal (Usignal2(x;t)) erfaßt wird,
g) jedes der Module (2) eine Steuerungselektronik (5), eine Empfangseinrichtung (6) und eine Sendeeinrichtung (S3) aufweist,
**dadurch gekennzeichnet, daß**
h) die Sendeeinrichtung (S3) der Module (2=2.1...2.x...2.n) einen Schalter (S3) aufweist, der zwischen der Busleitung (7) und einer dritten Spannungspegelguelle (U3) angeordnet ist, so daß die Sendeeinrichtung (S3) mittels dieses Schalters (S3) in Abhängigkeit von der Steuerelektronik (5) die Busleitung (7) auf einen von der Versorgungsgleichspannung abweichenden Spannungspegel (U3) zieht.

6. Schaltungsanordnung nach Anspruch 5, **dadurch gekennzeichnet, daß** jedes Modul eine Energieversorgungseinrichtung (8) aufweist, wobei die Energieversorgungseinrichtung (8) so ausgestaltet sind, daß sie aus zumindest einer der zwei Quellen Energie für das Modul (2) bezieht.

7. Verwendung des Verfahrens nach einem der vorangehenden Ansprüche 1 bis 4 für ein Sensorbussystem eines Insassenschutzsystems, insbesondere für Kraftfahrzeuge, bei dem von der Zentraleinheit (1) über die Module (2) insassenschutzrelevante Sensoren (9) ausgelesen werden und eine Auslöseentscheidung für ebenfalls mit der Zentraleinheit (1) verbundene Insassenschutzeinrichtungen abgeleitet wird.

## Claims

1. Method for transmitting signals in a bus system between a central processing unit (1) comprising two sources for two different voltage levels (U1, U2) connected to a bus line (7) via one switch (S1, S2) each, wherein a resistor (R1) is connected in parallel to one of the switches (S1), and a number n of modules (2=2.1 ...2.x), wherein each module (2) comprises an electronic control unit (5), a receiving device (6), and a transmitting device (S3),
a) wherein the central processing unit (1) transmits a first voltage signal (Usignal1 (x;t)) to at least one of the modules (2), said first voltage signal being carried by a supply direct voltage provided by the central processing unit (1) on at least one bus line (7), and
b) at least one of the modules (2) transmits a second voltage signal (Usignal2(x;t)),
c) wherein the central processing unit (1) and the modules (2) transmit in a time-shifted way and
d) the central processing unit supplies the supply direct voltage to the bus line (7) via the inserted resistor (R1) during the reception of the second voltage signal (Usignal2(x;t)) and
e) the second voltage signal (Usignal2(x;t)) caused by the module (2) is picked up in the central processing unit on the bus line (7) on that side of the resistor (R) which is not directed towards the supply direct voltage,
**characterized in**
f) that the transmitting device (S3), depending on the electronic control unit (5) and by means of a switch (S3) that is arranged between the bus line (7) and a third voltage level source (U3), takes the bus line (7) to a voltage level (U3) that deviates from the supply direct voltage.

2. Method according to claim 1, **characterized in that** the voltage level generated by the third voltage level source (U3) corresponds to the second voltage level (U2).

3. Method according to any one of the preceding claims, **characterized in that** the voltage signals (Usignall (x;t)); (Usignal2(x;t)) are pulse-width modulated bitwise by
a) the central processing unit (1), for generating a clock pulse, at first switching from the first voltage level (U1) to the second voltage level (U2) for each bit without inserting the resistor (R1),
b) the central processing unit (1), for transmitting data from the central processing unit (1) to the modules (2), returning to the first voltage level (U1) at a distance of time from the clock pulse and again without inserting the resistor (R), said distance of time depending on the bit information, whereas
c) the central processing unit (1) supplies the first voltage level to the bus line (7) via the resistor (R1) for a predetermined period for transmitting data from one of the modules (2) after generating the clock pulse, and the respective module (2) takes the supply line (7) to a deviating voltage level (U3) within this period depending on the bit information.

4. Method according to claim 3, **characterized in that** the deviating voltage level (U3) corresponds to the second voltage level (U2).

5. Circuit arrangement for carrying out a method according to any one of the preceding claims with
a) a central processing unit (1) and a number (n) of modules (2=2.1 ...2.x) as well as a bus system between this central processing unit (1) and the modules (2=2.1 ...2.x), in which the central processing unit (1) comprises two sources for two different voltage levels (U1, U2) connected to a bus line (7) via one switch (S1, S2) each, wherein a resistor (R1) is connected in parallel to one of the switches (S1),
b) in which the central processing unit (1) is configured in such a manner that the central processing unit (1) transmits a first voltage signal (Usignal1 (x;t)) to at least one of the modules (2), said first voltage signal being carried by a supply direct voltage provided by the central processing unit (1) on at least one bus line (7), and
c) at least one of the modules (2) is configured in such a manner that it transmits a second voltage signal (Usignal2(x;t)),
d) wherein the central processing unit (1) and the modules (2) are configured in such a manner that they transmit in a time-shifted way and
e) the central processing unit (1) is configured in such a manner that the central processing unit supplies the supply direct voltage to the bus line (7) via the inserted resistor (R1) during the reception of the second voltage signal (Usignal2(x;t)) and
f) the central processing unit (1) is configured in such a manner that the second voltage signal (Usignal2(x;t)) caused by the module (2) is picked up in the central processing unit on the bus line (7) on that side of the resistor (R) which is not directed towards the supply direct voltage,
g) each module (2) comprises an electronic control unit (5), a receiving device (6), and a transmitting device (S3),
**characterized in**
h) that the transmitting device (S3) of the modules (2=2.1 ...2.x ...2.n) comprises a switch (S3) arranged between the bus line (7) and a third voltage level source (U3) so that the transmitting device (S3), depending on the electronic control unit (5) and by means of this switch (S3), takes the bus line (7) to a voltage level (U3) that deviates from the supply direct voltage.

6. Circuit arrangement according to claim 5, **characterized in that** each module comprises a power supply device (8), wherein the power supply device (8) is configured in such a manner that it is supplied with power for the module (2) by at least one of the two sources.

7. Use of the method according to any one of the preceding claims 1 to 4 for a sensor bus system of a passenger protection system, in particular for motor vehicles, in which the central processing unit (1) reads out passenger-protection-relevant sensors (9) via the modules (2) and deduces a triggering decision for passenger safeguards, wherein said passenger safeguards are likewise connected to the central processing unit (1).

## Revendications

1. Procédé de transmission des signaux dans un système de bus entre une unité centrale (1), qui présente deux sources pour deux niveaux de tension différents (U1, U2), qui sont raccordés respectivement via un commutateur (S1, S2) à une ligne de bus (7), une résistance (R1) étant montée en parallèle avec un des commutateurs (S1), et un certain nombre n de modules (2=2.1 ...2x), chacun des modules (2) présentant une électronique de commande (5), un équipement de réception (6) et un équipement d'émission (53)
a) un premier signal de tension (Usignal1(x;t)) étant transmis depuis l'unité centrale (1) à au moins un des modules (2), superposé à une tension continue d'alimentation fournie par l'unité centrale (1) sur au moins une ligne de bus (7), et
b) au moins un des modules (2) envoyant un deuxième signal de tension (Usignal2(x;t)),
c) l'unité centrale (1) et les modules (2) émettant de façon décalée dans le temps, et
d) l'unité centrale acheminant sur la ligne de bus (7), pendant la réception du deuxième signal de tension (Usignal2(x;t)), la tension continue d'alimentation via la résistance (R1) intercalée et
e) le deuxième signal de tension (Usignal2(x;t)) suscité par le module (2) étant saisi dans l'unité centrale sur le côté de la résistance (R) éloigné de la tension continue d'alimentation sur la ligne de bus (7)
**caractérisé en ce que**
f) l'équipement d'émission (S3), au moyen d'un commutateur (S3) qui est disposé entre la ligne de bus (7) et une troisième source de niveau de tension (U3), tire, en fonction de l'électronique de commande (5), la ligne de bus (7) vers un niveau de tension (U3) divergent de la tension continue d'alimentation.

2. Procédé selon la revendication 1, **caractérisé en ce que** le niveau de tension produit par la troisième source de niveau de tension (U3) correspond au deuxième niveau de tension (U2).

3. Procédé selon une des revendications précédentes, **caractérisé en ce que** les signaux de tension (Usignal1(x;t) ; (Usignal2(x;t)) font l'objet d'une modulation de la durée d'impulsion bit par bit,
a) l'unité centrale (1), pour la production d'une cadence pour chaque bit, changeant depuis le premier niveau de tension (U1) vers le deuxième niveau de tension (U2) sans insertion de la résistance (R1),
b) l'unité centrale (1) adoptant, pour la transmission de données depuis l'unité centrale (1) vers les modules (2), dans un intervalle de temps de la cadence dépendant de l'information sur les bits, de nouveau le premier niveau de tension (U), de nouveau sans insertion de la résistance (R), tandis que
c) pour la transmission de données depuis un des modules (2) après la production de la cadence, l'unité centrale (1) acheminant à la ligne de bus (7), pendant une durée prédéfinie, via la résistance (R1), le premier niveau de tension et, à l'intérieur de cette durée, le module (2) respectif, en fonction de l'information sur les bits, tire la ligne d'alimentation (7) vers un niveau de tension (U3) divergent.

4. Procédé selon la revendication 3, **caractérisé en ce que** le niveau de tension (U3) divergent correspond aux deuxième niveau de tension (U2).

5. Dispositif de circuit pour la réalisation d'un procédé selon une des revendications précédentes, avec
a) une unité centrale (1) et un certain nombre (n) de modules (2=2.1...2.x) ainsi qu'un système de bus entre cette unité centrale (1) et les modules (2=2.1...2.x), dans lequel l'unité centrale (1) présente deux sources pour deux niveaux de tension différents (U1, U2) qui sont connectées à une ligne de bus (7) respectivement via un commutateur (S1, S2), une résistance (R1) étant montée parallèlement à un des commutateurs (S1),
b) dans lequel l'unité centrale (1) est réalisée de sorte que, se superposant à une tension continue d'alimentation de l'unité centrale (1) fournie par l'unité centrale (1) sur au moins une ligne de bus (7), un premier signal de tension (Usignal1 (x;t)) est transmis à au moins un des modules (2), et
c) au moins un des modules (2) est réalisé de sorte qu'il émet un deuxième signal de tension (Usignal2(x;t)),
d) l'unité centrale (1) et les modules (2) sont réalisés de sorte qu'ils émettent avec un décalage dans le temps, et
e) l'unité centrale (1) est réalisée de sorte que, pendant la réception du deuxième signal de tension (Usignal2(x;t)), l'unité centrale achemine la tension continue d'alimentation à la ligne de bus (7) via la résistance (R1) intercalée, et
f) l'unité centrale (1) est réalisée de sorte que, dans l'unité centrale, sur le côté de la résistance (R) éloigné de la tension continue d'alimentation, sur la ligne de bus (7), le deuxième signal de tension (Usignal2(x;t)) suscité par le module (2) est saisi,
g) chacun des modules (2) présente une électronique de commande (5), un équipement de réception (6) et un équipement d'émission (S3),
**caractérisé en ce que**
h) l'équipement d'émission (S3) des modules (2=2.1...2.x...2.n) présente un commutateur (S3) qui est disposé entre la ligne de bus (7) et une troisième source de niveau de tension (U3) de sorte que l'équipement d'émission (S3), au moyen de ce commutateur (S3), en fonction de l'électronique de commande (5), tire la ligne de bus (7) vers un niveau de tension (U3) divergent de la tension continue d'alimentation.

6. Dispositif de circuit selon la revendication 5, **caractérisé en ce que** chaque module présente un équipement d'alimentation en énergie (8), l'équipement d'alimentation en énergie (8) étant réalisé de sorte qu'il tire l'énergie pour le module (2) à partir d'au moins une des deux sources.

7. Utilisation du procédé selon une des revendications précédentes 1 à 4 pour un système de bus de capteurs d'un système de protection d'occupants, en particulier pour véhicules automobiles, dans lequel des capteurs intéressant la protection d'occupants sont lus par l'unité centrale (1) via les modules et une décision de déclenchement est dérivée pour des équipements de protection d'occupants également raccordés à l'unité centrale (1).
